(19) Europäisches Patentamt

European Patent Office

Office européen des brevets

(11) Veröffentlichungsnummer: **0 310 777 B1**

(12) **EUROPÄISCHE PATENTSCHRIFT**

(45) Veröffentlichungstag der Patentschrift: **25.03.92**

(21) Anmeldenummer: **88112501.7**

(22) Anmeldetag: **02.08.88**

(51) Int. Cl.⁵: **B60B 7/06**

(54) **Radabdeckung für ein Fahrzeugrad.**

(30) Priorität: **09.10.87 DE 3734211**

(43) Veröffentlichungstag der Anmeldung:
**12.04.89 Patentblatt 89/15**

(45) Bekanntmachung des Hinweises auf die
Patenterteilung:
**25.03.92 Patentblatt 92/13**

(84) Benannte Vertragsstaaten:
**DE FR GB IT SE**

(56) Entgegenhaltungen:
**EP-A- 0 109 939**
**EP-A- 0 185 102**
**DE-U- 8 534 757**
**FR-A- 948 322**

(73) Patentinhaber: **Bayerische Motoren Werke Aktiengesellschaft
Patentabteilung AJ-30 Postfach 40 02 40 Petuelring 130
W-8000 München 40(DE)**

(72) Erfinder: **Geupel, Helmut, Dr.
Sonnenläng 10a
W-8024 Oberhaching(DE)**
Erfinder: **Binder, Horst
Rainackerweg 2
W-8000 München 45(DE)**
Erfinder: **Kleisch, Hans
Von-Kobell-Strasse 3
W-8015 Markt-Schwaben(DE)**
Erfinder: **Panek, Otmar
Hochfellnstrasse 29a
W-8200 Rosenheim(DE)**

**Beschreibung**

Die Erfindung bezieht sich auf eine Radabdekkung der im Oberbegriff des Patentanspruch 1 genannten und aus der FR-A-948 322 hervorgehenden Art.

Die aus dieser Druckschrift bekannte Radabdeckung hat mehrere axial von ihrer Abdeckscheibe abstehende, winkelmäßig versetzt angeordnete sowie radial federnde Haltezungen, die an ihrem freien Endabschnitt jeweils einen radial nach außen gerichteten Haltenocken aufweisen. Über diese wird die Radabdeckung in der zentralen Durchgangs-Öffnung der Radscheibe des Fahrzeugrades lösbar befestigt. Bei Montage der Radabdeckung federn dabei die Haltezungen beim Durchführen ihrer Haltenocken durch die Durchgangsöffnung zunächst radial einwärts, während schließlich die Haltenocken in Einbaulage der Radabdeckung die Anlageschulter einer in der Durchgangsöffnung ausgebildeten Haltenase hintergreifen. Die somit durch Schnappwirkung erzeugte Befestigungseinrichtung der Radabdeckung hat wie alle derartigen Befestigungsmittel den Nachteil, daß für eine Demontage der Radabdeckung ein Hilfswerkzeug wie Schraubenzieher oder dergleichen erforderlich ist. Durch diesen können jedoch sehr leicht Lackbeschädigungen bzw. Kratzer an der Radabdeckung oder an der Radscheibe entstehen; außerdem muß das Hilfswerkzeug hierfür vorhanden sein. Es sind zwar auch an der Radabdeckung oder am Fahrzeugrad ausgebildete Demontageschlitze bekannt. Diese beeinträchtigen jedoch die optische Wirkung des Fahrzeugrades.

Ferner geht aus der EP-A-0109 939 eine als ein einstückiges Kunststoffteil ausgebildete Radabdeckung hervor, die im wesentlichen aus einer Abdeckscheibe und einem von dieser abstehenden hohlzylindrischen Fortsatz besteht. Dieser ist durch axial verlaufende sowie im Winkelabstand voneinander angeordnete Schlitze in sechs Sektoren unterteilt, die an ihrem freien Endbereich radial federn und durch einen Federring zusammengespannt werden. Ferner ist am freien Endabschnitt des hohlzylindrischen Fortsatzes eine von dessen Innenwandung radial nach innen abstehende Haltenase ausgebildet, die abschnittsweise mehrere Ausnehmungen mit jeweils einer schräg verlaufenden Steuerschulter aufweist. Schließlich stehen vom Fahrzeugrad axial mehrere Halteschrauben mit jeweils einer Umlaufnut ab, in die in Einbaulage der Radabdeckung die Haltenase des hohlzylindrischen Fortsatzes verrasternd eingreift. Bei einer Winkeldrehung der Radabdeckung im Uhrzeigersinn gleiten die Steuerschultern der Ausnehmungen der Haltenase über die Umfangsnut der Halteschrauben, wodurch der freie Endabschnitt des hohlzylindrischen Fortsatzes gegen die Wirkung des Federrings geringfügig radial nach außen verlagert wird und hierdurch schließlich die Radabdeckung in axialer Richtung vom Fahrzeugrad entfernt werden kann.

Aufgabe der Erfindung ist es, eine Radabdeckung der im Oberbegriff des Patentanspruchs 1 genannten Art mit einfachen Mitteln derart auszubilden, daß sie ohne Hilfswerkzeug und dabei rasch und mühelos demontiert werden kann.

Zur Lösung der Aufgabe sind die im kennzeichnenden Teil des Patentanspruchs 1 dargelegten Merkmale vorgesehen.

Durch die erfindungsgemäß zwischen Radscheibe und Radabdeckung ausgebildete, zusätzliche Löseeinrichtung mit stirnseitig gegeneinander wirkenden Löseelementen läßt sich die Radabdeckung vorteilhafterveise durch eine bloße Winkeldrehung vom Fahrzeugrad entfernen. Dabei kann das hierfür aufzubringende Lösemoment konstruktiv auch so ausgelegt werden, daß für die Erzeugung der Winkeldrehung ein sehr hoher Kraftaufwand erforderlich ist, um damit ein unbefugtes Entfernen der Radabdeckung zu erschweren. Vorteilhafterweise besteht die Löseeinrichtung aus wenig Einzelteilen und ist damit kostengünstig herzustellen sowie kaum störanfällig im Betriebseinsatz. Schließlich kann auch die Radabdeckung nach sehr langem, ununterbrochenem Festsitzen am Fahrzeugrad problemlos von diesem gelöst werden.

Gemäß den Merkmalen der Patentansprüche 2 und 3 ist an oder zwischen den Haltezungen jeweils ein achsparallel zu diesen verlaufender Vorsprung vorgesehen, denen jeweils eine abschnittsweise und koaxial die Durchgangsöffnung umgebende Steuerschulter zugeordnet ist, wobei die Vorsprünge in Einbaulage der Radabdeckung jeweils in den Grund der Steuerschultern eingreifen. Dabei hat jede Steuerschulter an ihren beiden Enden jeweils eine gleichgerichtet schräg verlaufende Anlaufschräge, so daß die Radabdeckung zum Demontieren in beide Drehrichtungen winkelgedreht werden kann.

Eine im Bereich ihres Umfangsrandes mehrere Haltezungen aufweisende Radabdeckung kann natürlich auch durch peripher über den Umfangsrand verlaufende Vorsprünge oder an diesem ausgebildete Steuerschultern - denen jeweils entsprechend verlaufende Steuerschultern bzw. Vorsprünge an der Radscheibe zugeordnet sind - mit dem Fahrzeugrad lösbar verbunden werden (Merkmale des Patentanspruches 4).

Ein Ausführungsbeispiel der Erfindung ist in der Zeichnung dargestellt und wird im folgenden erläutert. Es zeigt:

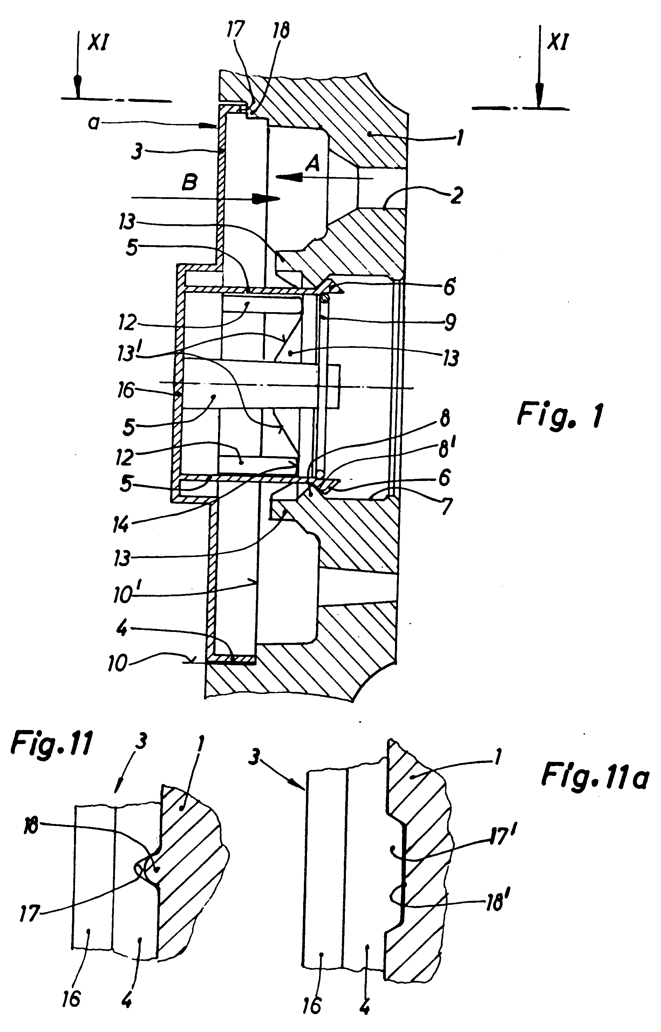

Fig. 1
einen Längsschnitt durch den Mittelbereich der Radscheibe eines nicht dargestellten Fahrzeugrades mit einer Radabdeckung in Einbaulage,

Fig. 2 bis 4

jeweils einenLängsschnitt im Mittelbereich der Radscheibe in Einbaulage (Fig. 2), während es Lösevorganges (Fig. 3) und bei vollständig gelöster Radabdeckung (Fig. 4),

Fig. 5

eine Teilansicht auf die Radabdeckung in Pfeilrchtung A in Figur 1,

Fig. 6

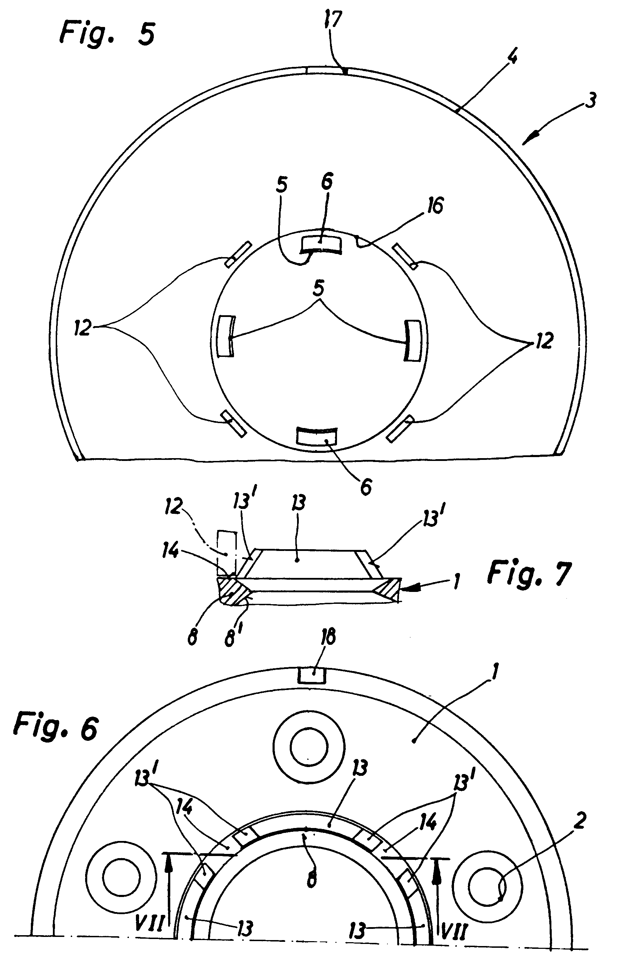

eine Teilansicht auf den Mittelbereich der Radscheibe in Pfeilrichtung B in Figur 1,

Fig. 7

einen Schnitt längs der Linie VII-VII in Figur 6,

Fig. 8

eine abgewandelte Ausführungsform der Erfindung,

Fig. 9

eine Teilansicht der Radscheibe in Pfeilrichtung D in Figur 8,

Fig. 10

eine Teilansicht der Radabdeckung in Pfeilrichtung C in Figur 8,

Fig. 11 und 11a

jewils einen Schnitt längs der Linie XI-XI in Figur 1.

In den Figuren 1 bis 4, 6 und 8 ist jeweils der mittlere Bereich der radial gerichteten Radscheibe 1 eines nicht weiter dargestellten Fahrzeugrades ersichtlich, das über mehrere, die Radscheibe 1 durchsetzende Befestigungslöcher 2 befestigt wird. Ferner hat die Radscheibe 1 eine lösbar an ihr anbringbare und aus Kunststoff bestehende Radabdeckung 3, die wie in vorliegendem Ausführungsbeispiel lediglich einen solchen Durchmesser aufweisen kann, daß sie den Nabenbereich überdeckt oder auch (nicht dargestellt) die Form einer Vollblende hat. Die Radabdeckung 3 weist nahe ihres Zentrums vier in jeweils gleich großem Winkelabstand voneinander angeordnete und gleichgerichtet axial abstehende Haltezungen 5 auf. Diese haben ein rechteckförmiges Querschnittsprofil, so daß sie in optimaler Weise radial federn können. Schließlich haben die Haltezungen 5 an ihrem freien Endabschnitt jeweils einen radial nach außen gerichteten Haltenocken 6, der in einem Längsschnitt der Haltezungen 5 firstförmig gestaltet ist.

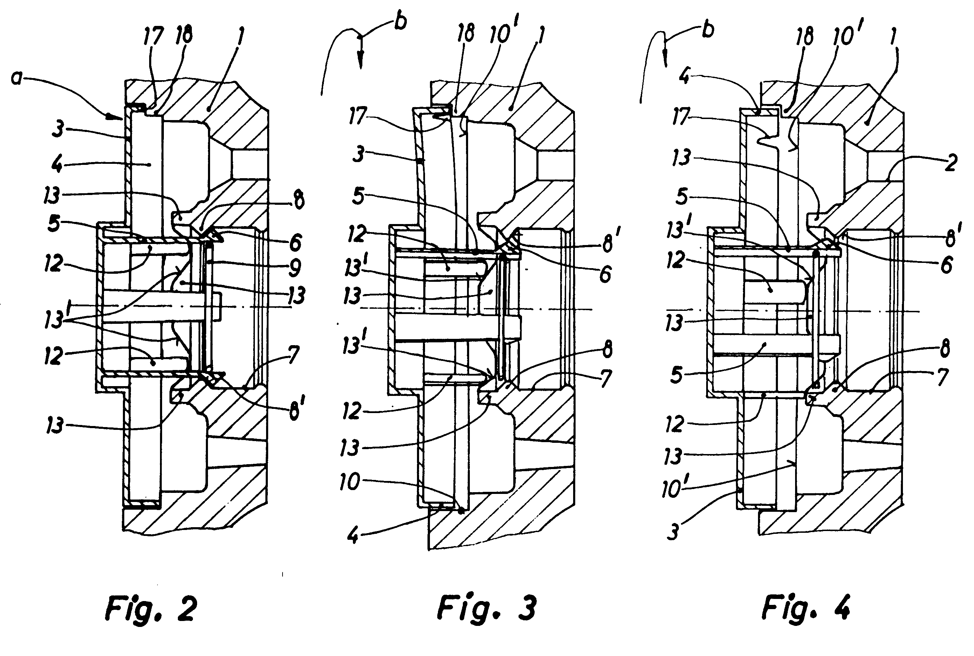

Für die Befestigung der Radabdeckung 3 an der Radscheibe 1 ist diese mit einer mittigen Durchgangsöffnung 7 versehen, die an ihrem der Radabdeckung 3 zugewandten Randbereich eine umlaufende, im Querschnitt firstförmig ausgebildete Haltenase 8 mit Anlageschulter 8' aufweist. An dieser liegen die Haltenocken 6 der Haltezungen 5 in der in den Figuren 1 und 2 dargestellten Einbaulage a der Radabdeckung 3 an, wobei die Haltezungen 5 ihrerseits mit ihrem Rücken jeweils an einem Federring 9 anliegen. Dieser hat eine Umfangslücke und liegt mit geringer radialer Vorspannung an den Haltezungen 5 an, so daß deren Haltenocken 6 ihrerseits an die Anlageschulter 8' der Haltenase 8 gedrückt werden. In der Einbaulage a der Radabdeckung 3 liegt schließlich auch deren axial verlaufender Umfangsrand 4 stirnseitig an einer Schulter 10' einer außenseitigen, zylindrischen Ausnehmung 10 der Radscheibe 1 an, so daß an dieser damit die Radabdeckung 3 axial spielfrei und rüttelsicher festgelegt ist.

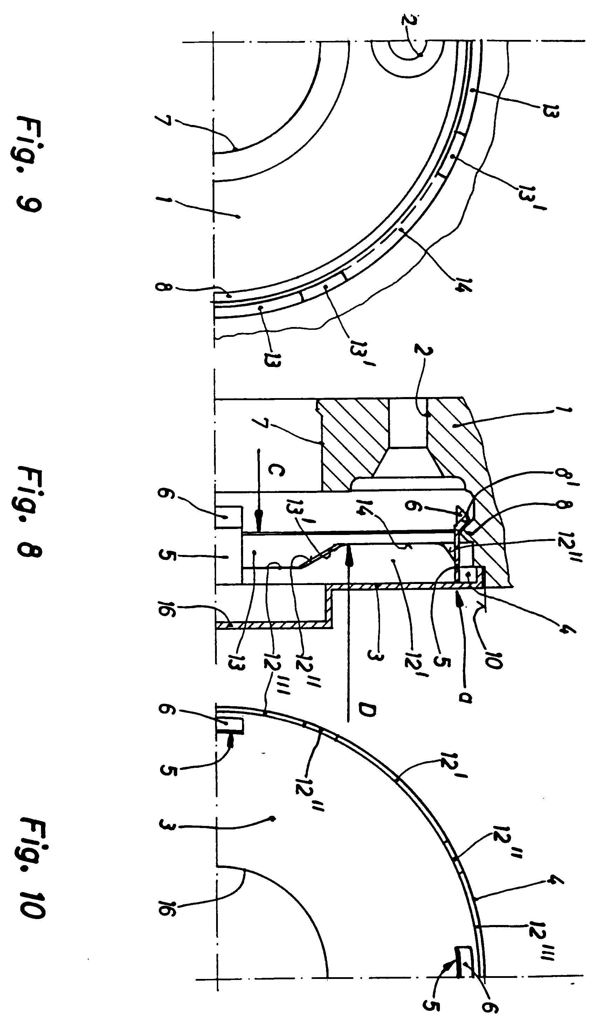

Wie in den Figuren 1 bis 4 und insbesondere Figur 5 ersichtlich, ist jeweils mittig (das heißt auf der Winkelhalbierenden) zwischen den Haltezungen 5 ein achsparallel zu diesen verlaufender Vorsprung 12 mit rechteckförmigen Querschnittsprofil angeordnet, die jeweils exakt gleichlang und einstückig an der Radabdeckung 3 ausgebildet sind. Ferner ist jedem der Vorsprünge 12 jeweils eine Steuerschulter 13 zugeordnet, die in vier, jeweils gleichgroßen Umfangsabschnitten die Durchgangsöffnung 7 koaxial umgeben und dabei axial gerichtet kragenartig von ihrem Grund 14 abstehen (Figur 1 bis 4). Figur 7 zeigt eine Einzelansicht einer Steuerschulter 13, von deren beiden obenliegenden Endkanten jeweils eine Anlaufschräge 13' nach außen zum Grund 14 verläuft; dabei sind die beiden Anlaufschrägen 13' symmetrisch angeordnet, wodurch die Steuerschulter 13 kegelstumpfförmig gestaltet ist. In der in den Figuren 1 und 2 gezeigten Einbaulage a der Radabdeckung 3 liegt die Stirnseite der Vorsprünge 12 über einen Luftspalt am Grund 14 der Steuerschultern 13 an. Deren gegenüberliegenden Anlaufschrägen 13' können - wie in Figur 6 dargestellt - als eine Sekante in Bezug zum Umfang der Steuerschultern 13 verlaufen, was für sehr breite Vorsprünge 12 vorteilhaft ist. Nach einem nicht dargestellten Ausführungsbeispiel ist es auch denkbar, daß die Anlaufschrägen 13' sektorartig verlaufen, also das Zentrum der Radscheibe 1 schneiden.

Beim Ausführungsbeispiel nach den Figuren 8 bis 10 sind die vier Haltezungen 5 der Radabdeckung 3 im Bereich ihres axial verlaufenden Umfangsrandes 4 angeordnet. In Einbaulage a der Radabdeckung 3 hintergreifen die Haltenocken 6 der vier Haltezungen 5 - gleichermaßen wie beim vorerwähnten Ausführungsbeispiel - die Anlageschulter 8' der radial gerichteten Haltenase 8. Wie in Figur 10 ersichtlich, ist am Umfangsrand 4 jeweils mittig (also im Bereich der Winkelhalbierenden) zwischen den Haltezungen 5 jeweils ein peripher verlaufender Vorsprung 12' ausgebildet, die an ihren beiden Enden jeweils eine Schräge 12'' aufweisen oder auch in Bezug zu ihrer Oberkante rechtwinkelig abgesetzt sein können; sowohl eine axial verlaufende Kante als auch die Schrägen 12'' erstrecken sich zu einem Grundabschnitt 12'''. Die vier Vorsprünge 12' der Radabdeckung 3 wirken jeweils mit einer bogenförmig verlaufenden Steuerschulter 13 an der Radscheibe 1 zusammen. Die Steuerschultern 13 haben an ihren Enden jeweils eine Anlaufschräge 13', die zu einem Grund 14 hin verlaufen; dieser entspricht in vorliegendem Ausführungsbeispiel der in den Figuren 1 bis 4 ersichtlichen Schulter 10' Die an der Radabdeckung 3 vorgesehenen Vorsprünge 12' können natürlich auch um jeden Winkelbereich versetzt, beispielsweise im Bereich der Haltezungen 5, angeordnet sein und damit mit den entsprechend an der Radscheibe 1 angeordneten Steuerschultern 13 zusammenwirken.

Die Radscheibe 3 hat ein von ihrer außenliegenden Ebene vorstehendes Griffteil 16, das beispielsweise als ein Sechskant gestaltet sein kann, so daß die Radabdeckung 3 für ihren Ein- und Ausbau unkompliziert winkelgedreht werden kann. Ferner kann die Radabdeckung 3 mit einer nicht dargestellten, stirnseitig erhabenen Speichenstruktur versehen sein, die radial zwischen dem Griffteil 16 und ihrem Umfangsrand 4 verläuft. Um zu gewährleisten, daß die Speichenstruktur in Einbaulage a der Radabdeckung 3 exakt mit einer an der zugewandten Stirnseite der Radscheibe 1 ausgebildeten Speichenstruktur übereinstimmt, ist im obenliegenden Bereich des Umfangsrandes 4 eine Ausnehmung 17 ausgebildet, die hierbei mit einer Fixiernase 18 an der Radscheibe 1 eines gegossenen Fahrzeugrades zusammenwirkt (Figur 1 bis 4, 6, und 11). Bei dem in Figur 11a gezeigten Ausführungsbeispiel handelt es sich um ein geschmiedetes Fahrzeugrad, wobei aus fertigungstechnischen Gründen an dessen Radscheibe 1 eine relativ breite Ausnehmung 18' ausgebildet ist, in die eine entsprechend breite Fixiernase 17' an der Radabdeckung 3 eingreift. Die Fixiernase 18 bzw. die Ausnehmung 18' an der Radscheibe 1 ist derart winkelmäßig in Bezug zum Grund 14 der Steuerschultern 13 angeordnet, daß bei der im folgenden erläuterten Montage der Radabdeckung 3 die Vorsprünge 12 bzw. 12' jeweils im Bereich des Grundes 14 liegen. Natürlich kann auch die in den Figuren 8 bis 10 dargestellte Radabdeckung 3 und Radscheibe 1 mit einer Fixierniase und Ausnehmung zur Positionierung der Drehlage der Radabdeckung 1 versehen sein.

Die Radabdeckung 3 wird wie folgt stirnseitig an die Radscheibe 1 des Fahrzeugrades montiert bzw. von dieser demontiert (Figur 1 bis 4 und 8).

Die Radabdeckung 3 wird zunächst derart stirnseitig an der Radscheibe 1 des Fahrzeugrades angeordnet, daß ihre Ausnehmung 17 im Bereich der Fixiernase 18 (bzw. ihre Fixiernase 17' im Bereich der Ausnehmung 18') liegt. Nunmehr werden die Haltenocken 6 der Haltezungen 5 derart gegen die außenliegende Stirnseite der Haltenase 8 gepreßt, daß die Haltezungen 5 gegen die Wirkung des eine Umfangslücke aufweisenden Federrings 9 radial einwärts federn und dadurch durch die lichte Weite der Haltenase 8 hindurchgeführt werden können. Schließlich liegen die Haltenocken 6 an der Anlageschulter 8' der Haltenase 8 an, wobei sie bei dem in den Figuren 1 bis 4 dargestellten Ausführungsbeispiel noch durch die Wirkung des sich dabei etwas radial entspannenden Federrings 9 satt angepreßt werden. Gleichzeitig liegt auch die innenliegende Stirnseite des Umfangrandes 4 an der Schulter 10' (bzw. am Grund 14 beim Ausführungsbeispiel nach Figur 8) an. Die Vorsprünge 12, 12' befinden sich dabei im Grund 14 der Steuerschultern 13 (Figuren 1, 2, 7 und 8).

Zum Demontieren wird die Radabdeckung 3 an ihrem Griffteil 16 erfaßt und in sie eine Winkeldrehung in Pfeilrichtung b (Figuren 3 und 4) eingeleitet. Hierbei gleiten alle vier Vorsprünge 12 und 12' der Radabdeckung 3 über die Anlaufschrägen 13' der Steuerschultern 13 der Radscheibe 1, wodurch die Haltenocken 6 der Haltezungen 5 durch Gleiten über die Anlageschulter 8' radial einwärts verlagert werden und schließlich im Bereich der Spitze der Haltenase 8 liegen, wie in Figur 3 ersichtlich. Durch geringfügiges weiteres Winkeldrehen der Radabdeckung 3 in Pfeilrichtung b liegen die Vorsprünge 12 und 12' schließlich auf der parallel zum Grund 14 verlaufenden Oberkante der Steuerschultern 13 (Figur 4 - gilt auch analog für das Ausführungsbeispiel nach Figur 8), so daß nunmehr die Radabdeckung 3 vollkommen ausgerastet ist und von der Radscheibe 1 abgenommen werden kann.

Der erforderliche Kraftaufwand für das Einleiten einer Winkeldrehung einer Radabdeckung 3 kann beispielsweise durch eine entsprechende Schräglage der Anlaufschrägen 13' der Steuerschultern 13 variiert werden, so daß die Radabdeckung 3 nur mit sehr hohem Kraftaufwand unbefugt entfernt werden kann.

## Patentansprüche

1. Radabdeckung für ein Fahrzeugrad, welche über eine Befestigungseinrichtung in einer zentralen Durchgangsöffnung (7) der Radscheibe (1) lösbar befestigt ist, wobei die Befestigungseinrichtung aus axial abstehenden und radial federnden Haltezungen (5) mit endseitigen Haltenocken (6) an der Radabdeckung (3) durch axiales Eindrücken unter Hintergreifen einer umlaufenden, radial gerichteten Haltenase (8) mit geneigter Anlageschulter (8') in der Durchgangsöffnung (7) der Radscheibe (1) einrastet, gekennzeichnet durch eine zusätzliche Löseeinrichtung, die aus mindestens zwei, an jeweils der Radscheibe (1) oder der Radabdeckung (3) in der Durchgangsöffnung (7) axial vorstehenden Vorsprüngen (12, 12') mit einer zugehörigen Steuerschulter (13) mit Anlaufschrägen (13') als Löseelementen gebildet ist, die derart stirnseitig gegeneinander wirken, daß nach einer Winkeldrehung (Pfeilrichtung b) der Radabdeckung (3) diese durch Freigabe der Haltenocken (6) der Befestigungseinrichtung selbsttätig nach außen ausrastet.

2. Radabdeckung nach Anspruch 1, dadurch gekennzeichnet, daß die Vorsprünge (12, 12') in Einbaulage (a) der Radabdeckung (3) jeweils in den zwischen den Steuerschultern (13) liegenden Grund (14) eingreifen.

3. Radabdeckung nach Anspruch 2, mit in gleich großem Winkelabstand angeordneten Haltezungen (5), dadurch gekennzeichnet, daß an oder zwischen den Haltezungen (5) jeweils ein achsparallel zu diesen verlaufender Vorsprung (12, 12') liegt, denen jeweils eine abschnittsweise die Durchgangsöffnung (7) umgebende und axial abstehende Steuerschulter (13) zugeordnet ist, wobei deren Anlaufschrägen (13') zu ihrem Grund (14) verlaufen.

4. Radabdeckung nach Anspruch 3, dadurch gekenzeichet, daß die Radabdeckung (3) im Bereich ihres Umfangsrandes (4) an oder zwischen den Haltezungen (5) mehrere, in gleich großem Winkelabstand angeordnete und dabei peripher verlaufende Vorsprünge (12') aufweist.

## Claims

1. A hub cap for a vehicle wheel, which is detachably secured in a central passage opening (7) of the wheel disk (1) through attachment means, in which the attachment means comprising axially-protruding and radially-elastic holding tongues (5) with holding cams (6) on the end sides engages on the hub cap (3) through pressing-in axially, with the engagement behind of a radially-directed holding nose (8) which runs all round with an inclined contact shoulder (8') in the passage opening (7) of the wheel disk (1), characterised by an additional release mechanism which is formed from at least two projections (12,12') protruding axially in each case on the wheel disk (1) of the hub cap (3) in the passage opening (7) with an associated guide shoulder (13) having starting inclinations (13') as release elements which act head-on on the front side such that, after an angular turning (direction of the arrow b) of the hub cap (3), the latter automatically disengages outwards through the release of the holding cams (6) of the attachment means.

2. A hub cap according to Claim 1, characterised in that the projections (12,12') in the fitting position (a) of the hub cap (3) engage in each case into the base (14) lying between the guide shoulders (13).

3. A hub cap according to Claim 2 having holding tongues (5) arranged at an angular spacing of equal size, characterised in that, on or between the holding tongues (5) and running paraxially thereto in each case a projection (12,12') lies, with which projection in each case there is associated a guide shoulder (13) surrounding the passage opening (7) in sectors and projecting axially, and in which the starting inclinations (13') thereof run to its base (14).

4. A hub cap according to Claim 3, characterised in that the hub cap (3) in the region of its peripheral rim (4) on or between the holding tongues (5) has a plurality of projections (12') arranged at an equal angular spacing and also running peripherally.

## Revendications

1. Enjoliveur de roue pour une roue de véhicule, qui peut être fixé de façon amovible au moyen d'un dispositif de fixation dans une ouverture de passage (7) de la jante de la roue (1), le dispositif de fixation s'encliquetant à partir de languettes d'arrêt (5) saillant axialement et faisant ressort radialement avec des ergots d'arrêt (6) terminaux sur l'enjoliveur de roue (3) grâce à une pression axiale par la venue en prise par l'arrière d'un nez d'arrêt (8), périphérique dirigé radialement avec un épaulement incliné (8'), dans l'ouverture de passage (7) de la jante de roue (1), enjoliveur de roue caractérisé par un dispositif amovible additionnel, qui est formé d'au moins deux saillies (12, 12') faisant saillie axialement sur respectivement la jante de roue (1) ou l'enjoliveur de roue (3) dans l'ouverture de passage (7) avec un épaulement associé (13) avec chanfrein (13') constituant des éléments séparables, qui agissent l'un contre l'autre par leurs faces de telle façon qu'après une rotation d'un certain angle (sens de la flèche b) de l'enjoliveur de roue (3) celui-ci s'encliquète automatiquement vers l'extérieur par libération des ergots d'arrêt (6) du dispositif de fixation.

2. Enjoliveur de roue selon la revendication 1, caractérisé en ce que les saillies (12, 12') dans la position de montage (a) de l'enjoliveur de roue (3 viennent en prise respectivement dans la base (14) se trouvant entre les épaulements (13).

3. Enjoliveur de roue selon la revendication 2, avec des languettes d'arrêt (5) disposées avec des écartements angulaires de même grandeur, enjoliveur caractérisé en ce qu'une saillie (12, 12') s'étendant sur les languettes d'arrêt (5) ou entre celles-ci parallèlement à leur axe, saillie à laquelle est associé un épaulement (13) entourant de façon segmentée l'ouverture de passage (7) et se dressant axialement, les chanfreins (13') de l'épaulement s'étendant jusqu'à sa base (14).

4. Enjoliveur de roue selon la revendication 3, caractérisé en ce que l'enjoliveur de roue (3) présente dans la zone de sa bordure périphérique (4) sur ou entre les languettes d'arrêt (5) plusieurs saillies (12') disposées avec un écartement angulaire de même grandeur et s'étendant périphériquement.

Fig. 1

Fig.11

Fig.11a

Fig. 4

Fig. 3

Fig. 2

Fig. 5

Fig. 7

Fig. 6

Fig. 9

Fig. 8

Fig. 10